# EUROPEAN PATENT SPECIFICATION

(11) **EP 4 184 272 B1**
(45) Date of publication and mention of the grant of the patent: **15.01.2025**
(21) Application number: 21208992.4
(22) Date of filing: 18.11.2021
(51) Int. Cl.: G05D 1/622

(54) **A METHOD FOR NAVIGATING AN AUTONOMOUS MOBILE ROBOT**
VERFAHREN ZUR NAVIGATION EINES AUTONOMEN MOBILEN ROBOTERS
PROCÉDÉ DE NAVIGATION D'UN ROBOT MOBILE AUTONOME

(43) Date of publication of application: 24.05.2023
(73) Proprietor: Mobile Industrial Robots A/S, 5260 Odense S (DK)
(72) Inventor: POULSEN, Jacob Sloth, 5000 Odense C (DK); JØRGENSEN, Troels Bo, 5220 Odense SØ (DK); IVERSEN, Jeppe Aakær, 5000 Odense C (DK)
(74) Representative: Patentgruppen A/S

(56) References cited:
- WO-A2-2018/158248
- DE-C1- 4 408 982

## Description

### Field of the invention

The present invention relates to a method for dynamically navigating an autonomous mobile robot. The invention further relates to an autonomous mobile robot for dynamical navigation.

### Background of the invention

Autonomous mobile robots are often required to navigate in environments having obstacles and elements which restrict the maneuverability of the robots. Moreover, since autonomous mobile robots may operate alongside human workers, the robots are typically subject to significant safety precautions in their maneuverability, such as keeping a minimal safety distance.

If an autonomous mobile robot encounters a sensed obstacle which conflicts with its planned route, the robot has to change its route to navigate around the sensed obstacle. In conventional solutions, a controller of the robot may for example establish a new sub route which circumvent both sensed obstacle and mapped elements based on selecting among a number of pre-programmed standard sub route patterns, such as circular arcs of different radii.

Autonomous mobile robots may be required to work in indoor environments, in which positioning systems, such as the Global Positioning System (GPS), relying on positioning via relative distance to external emitters external are restricted. Instead, autonomous mobile robots often rely on a process referred to as simultaneous localization and mapping (SLAM). Here a map of an environment is updated while simultaneously keeping track of the location of the robot within this map, typically relying on the sensory system of the robot. Alternatively, robots can rely on a Monte Carlo localization (MCL) algorithm, also referred to as particle filter localization, to estimate the position and orientation within a given map.

However, as autonomous mobile robots often move in areas in which no obstacles are within the sensory field of the robot, a discrepancy between its own perceived location and its actual location may arise. And consequently, a mismatch between sensed obstacles and mapped elements may occur, commonly on the order of 20 cm. If the robot then encounters a sensed obstacle which conflicts with its planned route, complications emerge, due to an incorrect perceived location. Particularly, the robot may interpret a sensed obstacle as being separate from a mapped element, even though this is not the case. As a result, this obstacle /element may be accounted for twice when establishing a new sub route. This may increase the computational effort required to establish a new sub route, result in suboptimal sub routes, and even prevent a feasible new sub route from being established.

Prior art document WO2018/158248 discloses to control an autonomous mobile robot. The disclosed control method may include sensing obstacles and enter the locations therefore in a map and use this map when controlling the robot. Further, it is disclosed how a user is able to define exception areas where the robot is prohibited to enter.

The above outlined problems of conventional autonomous mobile robot solutions are further enhanced by limited grid size of the digital area map in which mapped elements are represented. Even through a robot cannot properly navigate in a physical area without considering mapped elements when planning a route, the mapped elements are usually inaccurately represented in comparison with the real physical world of obstacles.

### Summary of the invention

The inventors have identified the above-mentioned problems and challenges related to navigation of autonomous mobile robots, and subsequently made the below-described invention which may improve navigation.

An aspect of the invention relates to a method for dynamically navigating an autonomous mobile robot, wherein said method comprises the steps of:
providing an area map relating to mapped elements having initial route implications;
providing a planned robot route through said area map, wherein said planned robot route is based on circumnavigating at least some of said mapped elements according to said initial route implications;
maneuvering said autonomous mobile robot through said planned robot route at least partly based on sensing robot surroundings of said autonomous mobile robot using a sensory system of said autonomous mobile robot;
the method is characterized in the steps of:
sensing one or more sensed obstacles in said robot surroundings using said sensory system, wherein said one or more sensed obstacles differentiate from said mapped elements wherein said one or more sensed obstacles correspond to the physical obstacle that said mapped elements represent;
reducing said initial route implications by ignoring at least some of said mapped elements to establish reduced route implications; and
establishing a sensor-based sub route based on said reduced route implications.

By reducing the initial route implications of at least some of the mapped elements, the impact of objects being accounted for twice when establishing a sub route is reduced, which is advantageous. Concretely, this may ensure that more optimal sub routes can be established, which is advantageous. Particularly, it may even ensure that sub routes can be established in scenarios in which conventional systems cannot establish a sub route, which is advantageous. Furthermore, since implications of mapped elements are reduced, the computational requirements of establishing a sub route may also be reduced, which is advantageous.

A reduction of computational requirements is particularly important when establishing sub routes, since this is a task which often has to be performed while the robot is actually moving. A slow computation may thus entail a reduction of the robot movement speed, or even lead to a complete stop of the robot, since sufficient time is required to establish the sub route prior to arriving at an obstacle which conflicts with a planned route. In areas with human workers, or other moving obstacles (such as other robots), rapid establishment of new sub routes may thus be crucial to ensure that the robot is not frequently slowed down or stopped.

Even through mapped elements are necessary for planning and maneuvering, they are typically inaccurately or imprecisely represented on a digital area map. Such maps typically have a restricted resolution/grid size. A typical resolution is on the order of 5 cm. And further, the actual process of establishing the area map (e.g., using the robot and its sensory system) is not perfectly accurate and precise. Consequently, as a robot approach imperfectly represented mapped elements along their route, they may systematically have to establish new sub routes at these mapped elements. By reducing initial route implications, it may potentially be possible to reduce the impact of such systematic errors, which is advantageous.

The solution offered by the invention to the problems and challenges of conventional solutions is highly counterintuitive. Functional robot routes of autonomous mobile robots in areas with obstacles cannot typically be planned without taking mapped elements with route implications into account. Therefore, actually reducing the implications of the crucial functionality provided by mapped elements speaks directly against conventional teachings which indicate that routing and navigation cannot be performed without mapped elements. The inventors have come to the realization that if an obstacle cannot be sensed by the sensory system, the risk of such an obstacle to affect the maneuverability of the autonomous mobile robot is low. Hence, the route implications of at least a subset of mapped elements may be reduced to potentially ensure simple establishment of a feasible sensor-based sub route. And, even though it may appear counterintuitive to suddenly reduce or even ignore initial route implications, the sensory system may typically remain active to sense obstacles. Thus, if a sub route actually passes through a physical object, then the sensory system may typically sense this object, such that another sub route can be established.

An autonomous mobile robot (AMR) may also be referred to as an automated guided vehicle (AGV), a drive unit, or a mobile industrial robot. Within this disclosure, an AMR may also simply be referred to as a robot. An AMR is typically a piece of machinery that is able to be programmed, e.g., to perform logistic tasks in industrial settings such as production facilities, warehouse facilities, and medicinal facilities, such as hospitals. Such robots typically move autonomously using its own wheels, having a body for supporting an object to be moved in a logistic task. Further, a robot typically has its own control system arranged to maneuver the robot along a route, such as a planned route. The control system may further be capable of planning a route, which the robot can then travel along. A control system may for example comprise a process controller and access to a digital storage. The digital storage may then provide a (digital) area map. Examples of autonomous mobile robots include differential drive robots, robots based on bicycle steering, and robots based on Ackermann steering. Examples further include autonomous robotic forklifts.

An area map may be understood as representation of the area in which the robot is supposed to perform tasks. It may for example be a digitally stored grid, where the grid size relates to a physical size of the area. Typically, the area map has mapped elements representing obstructions of the area, such as infrastructure elements and semipermanent elements, such as stored goods. For example, walls and furniture of the area limit the maneuverability of the robot, and these may then be represented as mapped elements in on the area map, such that these obstructions can be accounted for when planning a route for the robot.

The area map may have additional types of features, an example being mapped restrictions. A mapped restriction is typically a manually introduced restriction to the map, which represents a section of the area which the robot should not preferably enter, but which the robot cannot necessarily sense using its sensory system. One example is a downward staircase. Another example is a part of the section in which the robot is simply undesired, e.g. due to machinery or human workers.

An area map may be provided by maneuvering the robot around the area while using the sensory system of the robot to sense obstructions upon which mapped elements can be established. Alternatively, an area map may be partly or fully preestablished and simply provided to the robot, e.g., as a digital CAD-file. However, note that the invention is not restricted to a particular origin of the area map.

Based on the area map and the related mapped elements, a planned robot route may be provided. The robot may establish this planned route itself, but alternatively, the planned route may be partially or fully established elsewhere and then provided to the robot. A planned robot route may for example provide a feasible route for the robot between two locations of the area, or through particular locations of the area. Thus, the planned robot route has to at least to some degree take into account mapped elements. Otherwise, the planned robot route has a high risk of not being feasible, e.g. it may pass through an obstacle such as a wall. Thus, for feasible planning, the mapped elements have initial route implications, e.g., a planned robot route cannot pass through mapped elements.

Typically, the route implications are more detailed than simply restricting a route from passing through the mapped elements. Particularly, the robot has a physical robot size, and accordingly, the robot route should preferably be planned such that the mapped elements have a distance to the planned robot route which is sufficiently large to ensure that a collision or a conflict does not occur. Further, robots preferably keep a minimum distance to sensed obstacles and elements, e.g., due to safety, human comfort, or uncertainties in the area map. Accordingly, the robot route may preferably be planned such that mapped elements have a distance to the planned robot route which is sufficiently large to ensure that this minimum distance to obstacles and elements is respected, taking into account the physical robot size.

Route implications may for example be defined relatively to mapped elements, or they may for example defined relatively from the robot and/or its planned route. Sensed obstacles may typically also impose route implications onto the robot, which may potentially necessitate establishment of a sub route.

According to embodiments, the planned robot route thus has to circumnavigate at least some of the mapped elements according to the initial route implications of these mapped elements. Circumnavigating may alternatively be understood as navigating around, or circumventing, e.g. without violating the initial route implications.

Naturally, once the robot actually maneuvers through the route, discrepancies between the planned robot route and the actually route which the robot travels may occur, leading to potential violations of, e.g., a minimum distance.

Once the robot starts to maneuver, it typically uses a sensory system to scan its surroundings for objects and obstacles. Even a robot which is capable if following a planned robot route perfectly may encounter an unexpected obstacle which is not mapped. And in practice, robots are often not capable of flowing a planned robot route perfectly. Thus, a sensory system is typically necessary.

A sensory system may typically at least rely on sensors which are able to provide a measure of distance to surroundings. Often, LIDAR systems are used, but in principle, many different types of sensory systems are usable, e.g., radar systems, camera systems, or proximity sensors.

While the autonomous mobile robot is maneuvered through the planned robot route, the sensory system may sense the surroundings of the robot, e.g. continuously or regularly. Thus, the robot may be capable of sensing obstacles which could potentially conflict its route. Further, it may potentially use sensed surroundings to perform simultaneous localization and mapping or Monte Carlo localization to obtain an indication of an actual physical location of the robot in relation to the area map.

The physical extend of the robot surroundings may for example be characterized by the range or extend of sensing of the sensory system.

To maneuver a robot through a planned robot route corresponds to actual movement of the robot through physical area, which the area map represents.

The element of maneuvering said autonomous mobile robot through the planned robot route at least partly based on sensing robot surroundings may typically not correspond to moving the robot through the entire planned robot route, but simply an initial part of the planned robot route, e.g. until a point where establishment of a sensor-based sub route is necessary.

During the maneuvering, the sensory system may detect an obstacle, which is then a sensed obstacle. By performing localization, the robot (i.e. its control system) may deduce that the sensed obstacle correspond to a mapped element, which may then potentially be used to update the area map and/or the location of the robot in relation to this map.

However, the robot may detect a sensed obstacle which differentiates from the mapped element. This could be an object which has not been mapped, but the robot may also simply misinterpret a sensed obstacle which has been mapped as a mapped element as being different from that mapped element. Thus, a sensed obstacle may differentiate from a mapped element, even though the mapped element relates to that sensed obstacle. Thus, in the context of the present invention, when one or more sensed obstacles differentiate from mapped elements, they differentiate within the internal mapping system of the robot, e.g. on an area map having both sensed obstacles and mapped elements. Sensed obstacles differentiating from mapped elements may thus be understood as sensed obstacles differentiating from mapped elements with respect to location, e.g. with respect to location of the sensed obstacles relatively to the mapped elements on the area map.

When a sensed obstacle differentiates from a mapped element, establishment of a sub route may be necessary to ensure that the robot can proceed. Here, embodiments of the invention can then reduce the initial route implications of at least some of the mapped elements to establish reduced route implications. These reduced route implications then serve as basis upon which a sub route can be established. The reduced route implications may for example involve a reduction of the minimum robot-obstacle distance, ignoring the minimum robot-obstacle distance, ignoring the physical robot size, or even ignoring at least some of the mapped elements altogether.

The sub route which may then be established is a sensor-based sub route, in the sense that mapped elements may have lesser weight in the establishment of this sub route, and thereby, the sub route may to a larger degree be based on the sensory system of the robot. The sensor-based sub route may preferably take into account sensed obstacles, e.g. circumnavigate sensed obstacles. The robot may thus deviate from the planned robot route via the sensor-based sub route. During this, the robot may optionally maneuver only based on sensed obstacles, without taking into account mapped elements (hence reducing route implications of the mapped elements).

Note that embodiments of the invention are not limited to actively performing comparisons between sensed obstacles and mapped elements as a condition for reducing the initial route implications. In an exemplary embodiment, mapped elements and sensed obstacles are logically connected by a disjunction operator (OR operator) for the purpose and maneuvering the robot. And upon a potential conflict with the planned robot route, a sensor-based sub route is established in which only sensed obstacles are taken into account.

In some embodiments of the invention, said initial route implications of said mapped elements comprises a physical robot size representation of said autonomous mobile robot.

A physical robot size representation is a digital representation of the physical robot size.

A physical robot size representation may also be referred to as a physical footprint.

To feasibly plan a route, the actual size of the robot may advantageously be taken into account to reduce the risk of collisions while maneuvering through the route. The physical robot size may be taken into account in the planned robot route by ensuring that the mapped elements have a distance to the planned robot route which is sufficiently large to ensure that the physical robot size representation of the robot does not overlap with the mapped elements according to the planned robot route.

The physical robot size representation may for example be implemented, digitally, as a distance from the robot center which mapped elements may not lie within (for the planned robot route). Alternatively, the physical robot size representation may to a larger degree reflect the actual shape of the robot, taking into account orientation of the robot. Typically, autonomous mobile robots have a rectangular shape, but naturally, robots and methods according to the invention are not restricted to any particular shape.

In some embodiments of the invention, said initial route implications of said mapped elements comprises a minimum robot-obstacle distance.

A minimum robot-obstacle distance may also be referred to as a safety footprint.

A minimum robot-obstacle distance may for example be implemented, digitally, as a distance measured from the robot size representation, robot perimeter, or robot center, which mapped elements may not lie within (for the planned robot route).

In some embodiments, the physical robot size of the autonomous mobile robot and the minimum robot-obstacle distance is collectively implemented as a single distance measured, e.g., from the robot center, which mapped elements may not lie within. Such a collective implementation may be referred to as a robot total footprint. Any type of footprint (physical robot size representation, minimum robot-obstacle distance, robot total footprint) may be implemented as a (digital) footprint polygon. Robot routes may then be planned to ensure that this footprint polygon does not intersect with mapped elements and/or sensed obstacles. Generally, a footprint may also be referred to as a safety zone.

A minimum robot-obstacle distance is not necessarily isotropic with respect to the robot or robot center, but may for example be larger in the direction in which the robot is travelling.

Within this disclosure, when referring to a robot in the context of planning, navigating, or maneuvering, such a reference may also implicitly include a footprint/safety zone of the robot.

In some embodiments of the invention, said sensed obstacles have sub route implications.

In some embodiments of the invention, said sub route implications are substantially similar to said initial route implications.

In some embodiments of the invention, said sub route implications comprises said physical robot size representation.

In some embodiments of the invention, said sub route implications comprises said minimum robot-obstacle distance.

In a manner similar to the (initial) route implications of the mapped elements, sensed obstacles may also have (sub) route implications. In practice, these sub route implications are typically similar, or even identical to the initial route implications. The sub route implications may for example comprise a physical robot size representation and/or a minimum robot-obstacle distance.

Whereas the initial route implications have implications for the planned robot route, the sub route implications have implications for the sensor-based sub route. Thus, as the sub route is established, it is established with respect to the sub route implications, e.g. by ensuring that the distance to sensed obstacles along the sensor-based sub route does not violate a physical robot size representation and/or a minimum robot-obstacle distance.

In some embodiments of the invention, said reduced route implication comprises a reduced minimum robot-obstacle distance of said initial route implications.

In some embodiments of the invention, said reduced route implications comprises ignoring said minimum robot-obstacle distance of said initial route implications.

In some embodiments of the invention, said reduced route implications comprises ignoring said physical robot size representation of said initial route implications.

In some embodiments of the invention, said reduced route implications comprises ignoring said initial route implications.

Reducing or ignoring some or all of the initial route implications is advantageous, since such a procedure is simple to implement.

In some embodiments of the invention, said step of reducing said initial route implications is performed for mapped elements within a sub route envelope relative to said autonomous mobile robot.

In some embodiments of the invention, mapped elements outside said sub route envelope maintain said initial route implications during said step of establishing said sensor-based sub route.

By reducing initial route implications within a sub route envelope and/or maintaining initial route implications outside a sub route envelope, the risk of the robot planning an infeasible route is reduced, which is advantageous. In other words, the reduction of initial route implications may be performed locally, to establish a local sub route. If initial route implications are reduced globally, the risk of establishing a sub route through a wall or an obstacle may disadvantageously increase.

A sub route envelope may for example be defined relative to the orientation of the robot, travelling direction of the robot, or planned robot route (from the perceived robot location). It may for example extend at least 30 cm, for example at least 50 cm, for example at least 70 cm, for example at least 100 cm, such as at least 150 cm in each opposite transverse direction, relative to the travelling direction of the robot or planned robot route. Further, it may for example extent at least 1 m, for example at least 2 m, for example at least 3 m, for example at least 5 m, such as at least 8 m in a forward direction relative to the travelling direction of the robot or planned robot route.

In some alternative embodiments, route implications of sensed obstacles are reduced prior to establishing the sensor-based sub route. Such a reduction may for example be combined with a reduction of movability of the robot, since such a reduction of movability may decrease safety requirements, hence permitting a reduction of route implications of sensed obstacles. The reduction of route implications of sensed obstacles may typically be relatively less than the reduction of route implications of mapped elements.

In some embodiments of the invention, said step of establishing a sensor-based sub route is initiated automatically when said one or more sensed obstacles differentiate from said mapped elements.

A determination of whether a sensed obstacle differentiate from a mapped element may for example be performed by a processor which performs simultaneous localization and mapping or Monte Carlo localization, for example a process controller of the autonomous mobile robot. Thus, according to some embodiments, the process controller continuously or regularly evaluates whether a sensed obstacle differentiate from the mapped elements (e.g., using a SLAM-based or a MCL-based algorithm), and a sensor-based sub route is then established on the condition that a sensed obstacle differentiate form the mapped elements. Note that other conditions may optionally be required to be fulfilled to initiate establishment of a sensor-based sub route, such as a conflict between the planned robot route and a sensed obstacle.

Conditioning an automatic initiation of establishment of a sensor-based sub route on a determination of a difference between sensed obstacles and mapped elements is advantageous, since it may ensure that sensor-based sub routes are automatically established in relevant situations.

In some embodiments of the invention, said method comprises a step of determining that at least one of said one or more sensed obstacles is conflicting with said planned robot route, wherein said step of establishing a sensor-based sub route is initiated automatically when at least one of said one or more sensed obstacles is conflicting with said planned robot route.

Conditioning an automatic initiation of establishment of a sensor-based sub route on a determination that at least one of the sensed obstacles is conflicting with said planned robot route is advantageous, since it may ensure that sensor-based sub routes are automatically established in relevant situations.

In some embodiments of the invention, said step of determining that at least one of said one or more sensed obstacles is conflicting is based on automatically determining whether said autonomous mobile robot can be maneuvered along said planned robot route without violating said initial route implications with respect to said one or more sensed obstacles.

Thus, the same initial route implications which are used in said planned robot route may be used to determine whether a sensed obstacle is conflicting. This may ensure, that if the robot is maneuvered perfectly along a part of the planned robot route, and no unmapped objects appear, there is no risk off unnecessarily initiating establishment of the sensor-based sub route at this part, which is advantageous. Nevertheless, if a problematic sensed obstacle appears, or if the robot deviates from the planned locations, the criteria set by the initial route implications may ensure that a sensor-based sub route is planned when required.

Further, using the initial route implications for both mapped elements and sensed obstacles may increase simplicity of the programming of the system, and further ensure that simultaneously implementing changes to route implications for both sensed obstacles and mapped elements is easier, which is advantageous.

In some embodiments of the invention, said step of establishing said sensor-based sub route is performed when a discrepancy between a perceived robot location and an actual robot location occurs.

Having the condition of a discrepancy between the perceived robot location and an actual robot location for establishing the sensor-based sub route is advantageous, since it is often under such conditions that problematic sub route situations occur.

In some embodiments of the invention, said step of establishing said sensor-based sub route is performed when at least one of said one or more sensed obstacles have a sensed shape similar to a mapped shape of at least one of said mapped elements.

Having similar shapes as a condition for establishing the sensor-based sub route is advantageous, since such a situation may be indicative that a discrepancy between the perceived robot location and the actual robot location is occurring. The similarities of the shapes may be analyzed an identified by the robot, e.g. via a process controller of the robot.

In some embodiments of the invention, said sensor-based sub route is at least partly different from said planned robot route.

In some embodiments of the invention, said sensor-based sub route is conflicting with said initial route implications of at least some of said mapped elements.

Thus, in some embodiments of the invention, the sensor-based sub route may pass near or through some of the mapped elements. This counterintuitive approach is feasible since sensor-based sub routes are often necessary when the actual location of the robot is incorrect. Hence, mapped elements may not be necessary to respect in planning, at least in a restricted area of period of time. This may advantageously permit improved establishment of sensor-based sub routes.

In some embodiments of the invention, said step of establishing a sensor-based sub route is based on replicating at least a part of said planned robot route.

Replicating at least a part of the planned robot route may for example be implemented by transferring, copying, readjusting, or displacing a part of the planned robot route.

Basing the sensor-based sub route on the planned robot route may ensure that particular route-segments of the planned robot route is transferred to the sensor-based sub route. This is particularly advantageous when sensor-based sub routes are necessary in areas with many obstacles. Thus, a particular shape of the planned sub route may advantageously be recycled, which advantageously may reduce computational power. In particular, when establishing the sub route, the shape of the relevant part of the planned robot route may not need to be accounted for in a complex re-routing algorithm, but may simply be transferred (e.g., shifted) to the sensor-based sub route. Thus, if the planned robot route is complex, this complex aspect may be transferred, and of the planned robot route is simple, this simple aspect may be transferred, or anything in between.

Replication of the planned robot route is further useful, since sensor-based sub routes may often be necessary when the robot has a different location on the area map than it believes. Consequently, a replication of at least a part of the planned robot route may compensate for such a discrepancy, which is advantageous.

In some embodiments at least 30 percent of the sensor-based sub route replicates at least a part of the planned robot route, for example at least 50 percent, such as at least 70 percent. The percentage refers to the length of the sensor-based sub route.

In some embodiments of the invention, a deviation of said sensor-based sub route relatively to said planned robot route is restricted by a maximal sensor-based sub route deviation.

A maximal sensor-based sub route deviation may for example be implemented by a maximal distance, for example at most maximally 2 meters, for example at most maximally 1.5 meter, for example at most maximally 1 meter, such as maximally 0.5 meter.

Having such a maximal deviation may advantageously ensure that the element of reducing initial route implications is only used locally. For large deviations of the planned robot route, taking mapped elements and their route implications into account may typically be necessary for feasible route planning. Further, such a maximal deviation may ensure that a route is not planned far beyond the reach of the sensory system of the autonomous mobile robot, which is advantageous to ensure planning of feasible sub routes.

In some embodiments of the invention, said sensor-based sub route departs from one point of said planned robot route and arrives at another point of said planned robot route.

Thus, the sensor-based sub route ensures that the robot is eventually brought back to the planned robot route, which is advantageous.

In some embodiments of the invention, a substantial part of said sensor-based sub route is based on a displacement of said planned robot route, such that adjacent local segments of said sensor-based sub route are respectively parallel with adjacent local segments of said planned robot route.

The planned robot route may be replicated to such an extent that the sensor-based sub route is substantially parallel to the planned robot route. Typically, not all parts are parallel, for example near points where the sensor-based sub route departs from/arrives at the planned robot route.

In some embodiments of the invention, a length of said sensor-based sub route is maximally 20 meters, for example maximally 15 meters, for example maximally 12 meters, such as maximally 8 meters.

Having a maximal length of the sensor-based sub route may advantageously ensure that the element of reducing initial route implications is only used locally. For large route lengths, taking mapped elements and their route implications into account may typically be necessary for feasible route planning. And further, such a maximal length may ensure that a route is not planned far beyond the reach of the sensory system of the robot, which is advantageous to ensure planning of feasible sub routes.

In some embodiments of the invention, said sensor-based sub route lies within said sub route envelope.

The sub route envelope may define a region in which the route implications are reduced. This envelope may often correspond to a region in which sub route planning is feasible. Using the same (digital) envelope for both reduction of route implications and sub route planning may advantageously simplify programming.

In some embodiments of the invention, said method comprises a step of maneuvering said autonomous mobile robot through said sensor-based sub route at least partly based on sensing said robot surroundings using said sensory system.

The element of maneuvering said autonomous mobile robot through the sensor-based sub route at least partly based on sensing robot surroundings may not necessarily correspond to moving the robot through the entire sub route. A conflict may arise during this maneuvering. Thus, this step may correspond to maneuvering through an initial part of the sensor-based sub route.

In some embodiments of the invention, said method comprises a step of emitting a warning signal from said autonomous mobile robot in relation to said step of maneuvering said autonomous mobile robot through said sensor-based sub route.

A warning signal may for example be a warning signal and/or a warning sound emitted into the robot surroundings. Maneuvering on a sensor-based sub route is often indicative that the robot is operating under unusual circumstances with an increased risk of danger/collisions. Hence, emitting a warning signal may reduce such risks, particularly in case of persons being nearby.

In some embodiments of the invention, said step of maneuvering said autonomous mobile robot through said sensor-based sub route comprises violating said initial route implications with respect to at least some of said mapped elements.

Thus, in some embodiments of the invention, the robot may actually perceive its perceived robot location on the area map to violate initial route implications of mapped elements on the area map. However, since movement through the sub route typically relies on using the sensory system of the robot, such violations are not necessarily problematic, but may instead correspond to movement through a proper and feasible sub route. Thus, violating initial route implications may correspond to performing movement through an improved sub route, which is advantageous.

In some embodiments of the invention, said step of maneuvering said autonomous robot through said sensor-based sub route comprises regularly updating a perceived robot location indicative of a position of said autonomous mobile robot in relation to said area map.

The act of regularly updating the perceived robot location may for example be based on a dynamical comparison of sensed obstacles and mapped elements. By matching sensed obstacles with the mapped elements, the location of the autonomous mobile robot may be inferred. The act may for example be implemented via a SLAM algorithm or a MCL algorithm.

In some embodiments of the invention, said sensor-based sub route is adjusted during said step of maneuvering said autonomous robot through said sensor-based sub route based on said perceived robot locations.

For example, based on detection of sensed obstacles and comparison between these obstacles and mapped elements, the robot may recognize that its perceived robot location is incorrect and adjust it accordingly. And accordingly, the sensor-based sub route may also be readjusted, which may potentially improve efficiency of maneuvering the robot.

In some embodiments of the invention, said step of maneuvering said autonomous robot through said sensor-based sub route comprises a reduction of movability of said autonomous mobile robot.

In some embodiments of the invention, said reduction of movability comprises any of a speed reduction and a turning angle reduction.

That a sensor-based sub route requires establishment may be indicative of unusual robot surroundings. In such situations, the risk of collisions may be increased, in comparison to normal operation. Therefore, a reduction of movability of the autonomous mobile robot may advantageously reduce risk of such collisions.

In some embodiments of the invention, said step of maneuvering said autonomous robot through said planned robot route comprises regularly updating a perceived robot location indicative of a position of said autonomous mobile robot in relation to said area map.

The act of regularly updating the perceived robot location may for example be based on a dynamical comparison of sensed obstacles and mapped elements. By matching sensed obstacles with the mapped elements, the location of the autonomous mobile robot may be inferred. The act may for example be implemented via a SLAM algorithm or a MCL algorithm.

The perceived robot location may correspond to a (digital) perceived location of the autonomous mobile robot on the area map. This perceived robot location may not necessarily correspond to an actual (physical) robot location, since discrepancies between the perceived robot location and the actual robot location may occur.

In some embodiments of the invention, said step of sensing said one or more sensed obstacles is performed during said step of maneuvering said autonomous robot through said planned robot route.

In some embodiments of the invention, said step of maneuvering said autonomous robot through said planned robot route correspond to normal operation of said autonomous mobile robot.

In other words, the reduction of initial route implications and the establishment of a sensor-based sub route correspond to abnormal operation. The operation is abnormal in the sense that the robot may now deviate from its planned robot route.

In some embodiments of the invention, said one or more sensed obstacles forms a passageway, wherein said sensor-based sub route passes through said passageway.

The sensor-based sub route may pass through the passageway in the sense that at least one sensed obstacle is located on either said of the sub route. An example of a passageway is a doorway (in which the walls on either side of the doorway may be sensed by the robot as obstacles).

The aspect of reducing initial route implications is particularly useful in passageways, since in such geometries, the risk of the sensed obstacles and the mapped elements, in combination, forming an impassable obstruction, if the initial route implications are respected, may be increased. Hence, embodiments of the invention may be particularly advantageous, in comparison with conventional solutions, in such geometries.

In some embodiments of the invention, said area map relate to an inside environment.

In some embodiments of the invention, said area map relate to a flat-floored environment.

The solutions offered by the invention are particular useful in inside environments and flat-floored environments.

An aspect of the invention relates to an autonomous mobile robot for dynamical navigation, wherein said autonomous mobile robot comprises:
a sensory system arranged to sense robot surroundings of said autonomous mobile robot to sense one or more sensed obstacles;
a digital storage access providing access to an area map relating to mapped elements having initial route implications and access to a planned robot route through said area map, wherein said planned robot route is based on circumnavigating at least some of said mapped elements according to said initial route implications; and
a process controller communicatively connected to said sensory system and said digital storage access,

wherein said process controller is configured to maneuver said autonomous robot through said planned robot route at least partly based on sensing said robot surroundings using said sensory system,
said autonomous mobile robot is characterized in that
said process controller is configured to ignore at least some of said mapped elements to establish reduced route implications when said one or more sensed obstacles differentiate from said mapped elements wherein said one or more sensed obstacles (6) correspond to the physical obstacle that said mapped elements (3) represent,
wherein said process controller is configured to establish a sensor-based sub route based on said reduced route implications.

The aspect of an autonomous mobile robot may provide the same of similar advantages and improvements as provided by the aspect of a method for dynamically navigating an autonomous mobile robot.

A process controller is typically an electronic controller responsible for automatically maneuvering the robot via controlling means of movements, such as wheels, or continuous track propulsion systems. The process controller may include, for example, one or more processing devices such as one or more microcontrollers, one or more microprocessors, programmable logic such as a field-programmable gate array (FPGA), one or more application-specific integrated circuits (ASICs), solid state circuitry, or any appropriate combination of two or more of these types of processing devices. In an alternative embodiment, the process controller is partially or fully located remotely. That is, it is mechanically disconnected from wheels, motors, and body of the robot. Elements of the invention relating to control may be implemented on the process controller.

A digital storage access is an access to a digital storage. The digital storage may either be a part of the autonomous mobile robot or located externally. If the digital storage is located externally, it may be access by a communicative connection, preferably a wireless communicative connection, for example a Wi-Fi connection. Any storage used in the field of robotics may be used, such as a hard disk drive, solid state drive, or flash drive. The storage may optionally be at least partially cloud based.

In some embodiments of the invention, said sensory system is at least based on one or more range sensors.

In some embodiments of the invention, said one or more range sensors comprises at least one LIDAR scanner.

Other examples of range sensors are proximity sensors, radar systems, and cameras (potentially in combination with image analysis to determine range).

In some embodiments of the invention, said sensory system is at least based on an odometer.

The odometer may particularly be useful for supporting navigation when there are no sensed obstacles in the robot surroundings, which can otherwise be used for localization of the robot via, e.g., a SLAM algorithm or a MCL algorithm.

In some embodiments of the invention, said sensory system is at least based on a gyro meter.

The gyro meter may provide an indication of orientation of the robot. It may support the odometer in providing an approximate perceived robot location, particularly while there are no sensed obstacles in the robot surroundings.

Alternatively, movement and orientation may be determined by based on forward kinematics of wheels used for steering, e.g. a right turn can be determined from a left wheel rotating forward in combination with a right wheel rotating backward.

In some embodiments of the invention, said autonomous mobile robot further comprises a separate safety controller.

The safety controller may provide functionalities to ensure that the robot can break or maneuver to avoid collisions, e.g., if a person suddenly walks into the route of the robot, corresponding to the sudden appearance of a sensed obstacle.

Such safety functionalities may typically be separate from the functionalities providing the sensor-based sub routes. In other words, the process controller and the safety controller provide may provide two separate functionalities.

In some embodiments of the invention, said process controller is further arranged to perform a docking process, which is separate from establishing said sensor-based sub route.

To charge the robot and to deposit it while it is not in use, the robot may perform a docking process to move into a robot dock. In this process, route implications of mapped elements may potentially be reduced. However, the docking process is separate from the establishment of the sensor-based sub route. For example, it is typically not performed while the robot is being maneuvered along a planned robot route.

In some embodiments of the invention, said process controller is configured to reduce said initial route implications of at least some of said mapped elements to establish said reduced route implications when said one or more sensed obstacles differentiate from said mapped elements while said sensor-based sub route is possible to establish within a maximal sensor-based sub route deviation relatively to said planned robot route.

In alternative embodiments the process controller is configured to reduce the initial route implications of at least some of the mapped elements to establish the reduced route implications when the one or more sensed obstacles differentiate from the mapped elements while the sensor-based sub route is possible to establish within a sub route envelope relative to the robot or the planned robot route (instead of within a maximal sensor-based sub route deviation relatively to the planned robot route).

In some embodiments of the invention, said process controller is configured to establish an expanded sub route when said one or more sensed obstacles differentiate from said mapped elements while said sensor-based sub route is impossible to establish within said maximal sensor-based sub route deviation relatively to said planned robot route.

In alternative embodiments, the process controller is configured to establish an expanded sub route when the one or more sensed obstacles differentiate from the mapped elements while the sensor-based sub route is impossible to establish within the sub route envelope (instead of within the maximal sensor-based sub route).

In some embodiments of the invention, said expanded sub route is established based on said initial route implications.

In some embodiments of the invention, said expanded sub route is based on selecting among a number of pre-programmed route patterns.

In some embodiments of the invention, said expanded sub route is established within a maximal expanded sub route deviation relatively to said planned robot route.

In some embodiments of the invention, said process controller is configured to establish said global sub route when said one or more sensed obstacles differentiate from said mapped elements while said expanded sub route is impossible to establish within said maximal expanded sub route deviation.

In some embodiments of the invention, said global sub route is established based on said initial route implications.

In some embodiments of the invention, said global sub route has an end destination which is similar to an end destination of said planned robot route.

In some embodiments, the functionality of establishing a sensor-based sub route may be combined with related functionalities, such as establishment of an expanded sub route and/or establishment of a sensor-based sub route.

A sensor-based sub route may sometimes primarily be feasible in a restricted region around the robot, due to the reduction of route implications of mapped elements. However, if it is not possible to establish a sensor-based sub route, for example due to sensed obstacles blocking any path within a maximal sensor-based sub route deviation, then other functionalities may optionally be implemented in the robot.

Establishing an expanded sub route based on initial route implications or establishing a global sub route based on initial route implications, is not necessarily novel in comparison with conventional solutions. However, combining any of these with the functionality of establishing a sensor-based sub route may potentially provide improved autonomous mobile robots for dynamical navigations. Particularly, a sensor-based sub route may be useful in some scenarios. And when a sensor-based sub route is not viable, an expanded sub route may be viable. And when an expanded sub route is not viable, a global sub route may be.

Hence, the functionality of establishing a sensor-based sub route may be combined with other sub route options, potentially providing a flexible and improved selection of tools for dynamical navigation.

A sensor-based sub route being impossible to establish may typically correspond to a sensor-based sub route not being possible to establish without violating initial route implications of sensed obstacles, e.g., without maintaining a minimum distance to the sensed obstacles.

An expanded sub route being impossible to establish may typically correspond to an expanded sub route not being possible to establish without violating initial route implications of sensed obstacles and mapped elements, e.g., without maintaining a minimum distance to the sensed obstacles and mapped elements.

A maximal expanded sub route deviation is typically larger than a maximal sensor-based sub route deviation.

In embodiments of the invention the maximal expanded sub route deviation is at least 1 meter, for example at least 2 meters, for example at least 3 meters, for example at least 4 meters, such as at least 5 meters.

In some embodiments of the invention, said autonomous mobile robot is dynamically navigated according to any autonomous mobile robot of this disclosure.

An aspect of the invention relates to use of a replication of a planned robot route when establishing a sub route of an autonomous mobile robot, wherein said planned robot route goes through an area map relating to mapped elements, wherein said planned robot route is based on circumnavigating at least some of said mapped elements according to said initial route implications, wherein establishment of said sub route is initiated when a sensed obstacle differentiate from said mapped elements when said one or more sensed objects correspond to the physical obstacle that said mapped element represent.

In some embodiments of the invention, said sensed obstacle is conflicting with said planned robot route when maneuvering said autonomous mobile robot along said planned robot route cause a violation of said initial route implications with respect to said sensed obstacle.

In some embodiments of the invention, a deviation of said sub route relatively to said planned robot route is restricted by a maximal sub route deviation.

In some embodiments of the invention, said sub route departs from one point of said planned robot route and arrives at another point of said planned robot route.

In some embodiments of the invention, a substantial part of said sub route is based on a displacement of said planned robot route, such that adjacent local segments of said sub route are respectively parallel with adjacent local segments of said planned robot route.

In some embodiments of the invention, said sub route is the sensor-based sub route according to any sensor-based sub route of this disclosure.

The concept of establishing a sub route of an autonomous mobile robot by replicating a part of a planned robot route may potentially be used without necessarily reducing initial route implications. In itself, this approach for establishing sub routes is advantageous, since it may provide simplified establishment which is adapted to the local part of an area/planned robot route.

Such use of a replication of a planned robot route may potentially be implemented in an autonomous mobile robot and a method for an autonomous mobile robot.

### The drawings

Various embodiments of the invention will in the following be described with reference to the drawings where
fig. 1 illustrates a problematic navigation conflict which may occur within the prior art,
fig. 2 illustrates a sensor-based sub route according to an embodiment of the invention,
fig. 3 illustrates an example of an autonomous mobile robot,
fig. 4a-d illustrate various examples of route implications and reduced route implications,
fig. 5 illustrates a sensor-based sub route according to an embodiment of the invention,
fig. 6 illustrates a flow chart of method steps according to an embodiment of the invention, and
fig. 7a-c illustrate various options sub route options according to embodiments of the invention.

### Detailed description

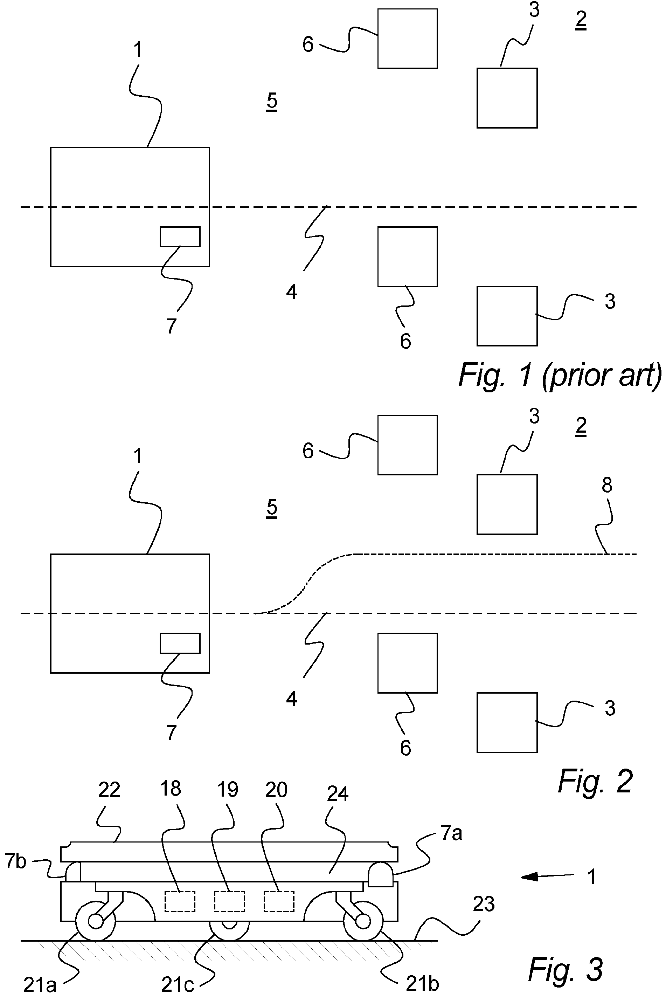

Fig. 1 illustrates a problematic navigation conflict which may occur within the prior art. The illustration shows a top view of an autonomous mobile robot 1 maneuvering, towards the right-hand-side, along a planned robot route 4. The planned robot route 4 circumnavigates mapped elements 3 according to route implications. In this particular prior art example, theses route implications comprise a minimum distance which the robot has to maintain to the mapped element 3 while it travels on the planned robot route 4.

In practice, the mapped elements 3 and the planned robot route 4 are represented via a digital area map 2, which in turn map be graphically represented as shown in the fig. 1.

The robot 1 comprises a sensory system 7 with which it senses obstacles 6 in its surroundings 5. These sensed obstacles 6 has the same route implications as the mapped elements 3. That is, the robot 1 has to maintain a minimum distance to the sensed obstacles 6 while it travels on the planned robot route 4. In the particular situation illustrated in fig. 1, the robot 1 cannot maintain this minimum distance along the planned robot route. Hence, a sub route has to be established, such that the robot can continue towards its destination.

Unfortunately, as a consequence of the combined route implications of the mapped elements 3 and the sensed obstacles 6, a simple sub route cannot be easily established. As a result, a lengthy detour has to be planned, potentially increasing travelling times, risk of accidents, risk of further conflicts requiring further sub routes, increased processing time etc.

In order to overcome the limitations and problems of the prior art, the invention introduces the concept of reducing the initial route implications of the mapped elements 3. An example of this concept is presented in fig. 2, which illustrates a sensor-based sub route 8 according to an embodiment of the invention.

Fig. 2 illustrates a situation which has similarities of the situation illustrated in fig. 1. Namely, a top view of an autonomous mobile robot 1 maneuvering along a planned robot route 4, the planned robot route circumnavigating mapped elements 3 according to initial route implications. The robot 1 further has a sensory system 7 for sensing sensed obstacles 6 in its surroundings, and these sensed obstacles similarly imply route implications onto the maneuvering of the robot 1. And in the particular situation illustrated in fig. 2, the robot cannot maintain a minimum distance according to route implications and a sub route has to be established. The mapped elements 3 and the planned robot route 4 are represented via a digital area map 2 accessible to the robot 1. The area map may be graphically represented as shown in fig. 2.

Sensed obstacles 6 which differentiate from mapped elements 3 can in fact correspond to the physical obstacles that the mapped elements 3 represent, but due to a discrepancy between the perceived robot location and the actual robot location, the robot may differentiate such sensed obstacles 6 from the mapped elements 6 representing them. Accordingly, the illustrated situation may occur, in which the combination of sensed obstacles 6 and mapped elements 3 block any sensible sub route.

To overcome this problem, the initial route implications of the mapped elements 3 are reduced, establishing reduced route implications of these mapped elements 3. In this particular scenario, the reduced route implications correspond to simply ignoring the initial route implications. Thus, a sensor-based sub route 8 may be established which is only based on circumnavigating sensed obstacles, and not circumnavigating mapped elements 3. As a result, a sensor-based sub route 8 is established which directs the robot in between the two sensed obstacles 6 shown in fig. 2, but very closely along a mapped element 3, i.e., a sub route which would typically not be established using conventional methods and solutions, but which is far more efficient.

If the robot maneuvers along the sensor-based sub route 8 and it turns out that the mapped elements 3 actually correspond to actual physical obstacles, these may then be registered as sensed obstacles 6, upon which the robot 1 can potentially establish a new sub route.

Fig. 3 illustrates an example of an autonomous mobile robot 1. This particular illustration shows a side view of the robot 1 located in a flat-floored environment 23, such as a production facility.

The robot 1 comprises a sensory system 7a-b in the form of two LIDAR scanner, placed in opposite corners of the robot 1. Given the positioning of the LIDAR scanners 7a-b at the corners of the robot 1, and a longitudinal gap 24 around the exterior of the robot 1 which permits a scan signal to travel into the robot surroundings from the LIDAR scanners, each of the two LIDAR scanners are able to scan approximately an angle 270 degrees. The LIDAR scanners 7a-b are thus efficiently able to horizontally cover all 360 degrees around to robot at least once.

Moreover, three wheels 21a-c are visible in the illustration. The robot has a total of six wheels, where the visible wheels 21a-c obstruct the view to the remaining wheels.

Some of the wheels 21a-b are responsible for steering the robot. Other wheels 21c are associated with one or more odometers, which provides an indication of a distance travelled by the robot 1. This is useful for supporting navigation, particularly when there are no obstacles in the surroundings of the robot which it can use for determining its location, e.g., relative to an area map. In other embodiments, the same wheels are used for steering and odometry.

Moreover, the robot has a support surface 22 for receiving items to be transported by the robot 1.

The robot further comprises a process controller 18, a digital storage access 19, and a safety controller 20. These elements are integrated internally in the robot 1, indicated by dashed rectangles in the illustration.

The process controller 18 controls establishment of planned robot routes, sub routes, maneuvering the robot (via the wheels), and execution of a Monte Carlo localization algorithm. The controller 18 further initiates reduction of the initial route implications and performs the reduction. The digital storage access 19 provides access to, at least, an area map. In this particular robot, the digital storage access 19 is a local digital storage integrated in the robot 1. The safety controller 20 provides safety functionalities, such as emergency braking for avoiding collisions with people and obstacles.

The process controller 18 and the sensory system 7a-b are communicatively connected, such that measurements performed by the LIDAR scanners 7a-b can be provided to the process controller 18, such that these measurements can be processed. The input to the process controller 18 from the sensory system 7a-b can thus serve as basis for maneuvering the robot and for initiation of reduction of initial route implications.

An additional example of an autonomous mobile robot is provided in the international application WO 2020/182470 A1, which additionally provides an example of enablement of establishment of a planned robot route and an area map.

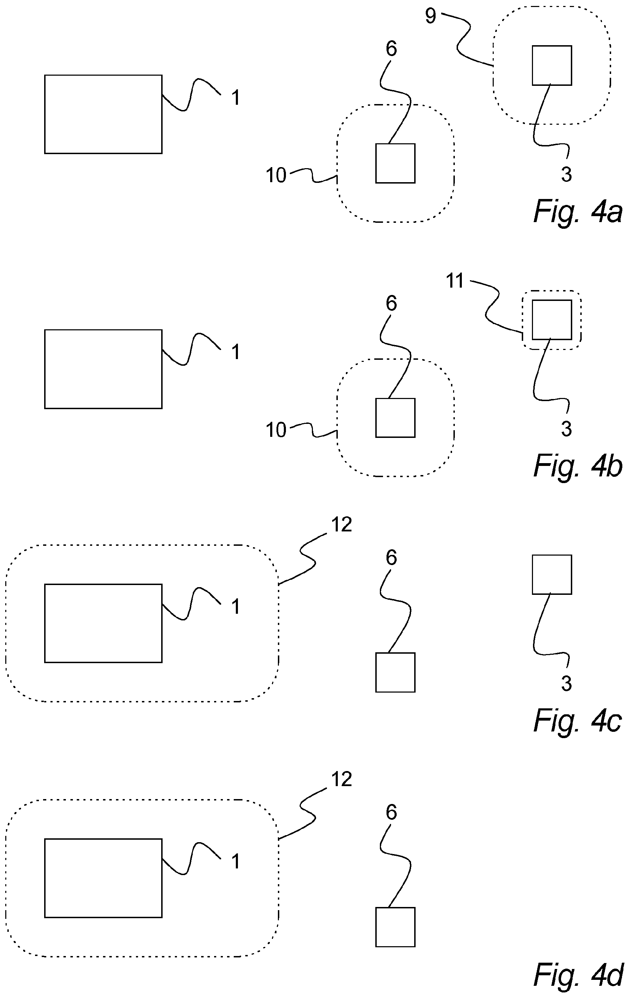

Fig. 4a-d illustrate various examples of route implications and reduced route implications. Each of the four subfigures illustrates a top view of an autonomous mobile robot 1 heading towards a mapped element 3 and a sensed obstacle 6.

Generally, route implications of mapped elements 3 and sensed obstacles may be implemented in various manners. Typically, route implications involve some kind of a representation of a distance which the robot should preferably at least maintain, for example a safety distance of 50 cm from the outer perimeter of the robot to a sensed obstacle and/or a mapped element. Route implications do not need to be isotropic in all directions. A minimum distance in a travelling direction may for example be larger than other minimum distances. Further, route implications and minimum distances may be dynamical, e.g., when travelling at a high speed, a robot may have a larger minimum distance than when it is travelling at a low speed. Or whenever the robot carries an object, it may have an increased minimum distance.

Route implications may be represented as area around sensed obstacles and/or mapped elements which the robot should preferably not enter. Whether the robot enters such an area may for example be determined based on an outer perimeter of the robot, or it may be determined relatively to a reference point of the robot, such as a center of the robot. Alternatively, route implications may be represented as an area relative to the robot which sensed obstacles and/or mapped elements should preferably not enter as a result of maneuvering the robot around.

Route implications represented as areas around mapped elements and sensed obstacles are shown in fig. 4a and fig. 4b. In fig. 4a, a sensed obstacle 6 has route implications of a sensed obstacle 10, and a mapped element 3 has initial route implications 9. In fig. 4b, the initial route implications 9 of the mapped element 3 shown in fig. 4a has been reduced to establish reduced route implications 11. Note particularly that the area of the reduced route implications 11 is smaller than the area of the initial route implications.

Representations of route implications relatively to the autonomous mobile robot 12 are shown as an area around the robot 1 in fig. 4c and fig. 4d. In fig. 4c, a sensed obstacle 6 and a mapped element 3 impose restriction as to how the robot can be maneuvered, since the route implications relatively to the autonomous mobile robot 12 should preferably not overlap the sensed obstacle and/or the mapped element. In case of a reduction of the initial route implications of a mapped element to establish reduced route implications, a mapped element (and hence its implication on the route of the robot) may simply be ignored, which is illustrated in fig. 4d. In comparison with fig. 4c, the mapped element 3 has been removed in fig. 4d. By ignoring the mapped element, the initial route implications of this mapped element have been reduced to establish reduced route implications, and hence, a sensor-based sub route can be established more liberally, while respecting the route implications relatively to the autonomous mobile robot 12. In other words, when establishing a sensor-based sub route, it may be established using an area map having only the sensed obstacles as represented in fig. 4d, in contrast to establishing using an area map having both sensed obstacles and mapped elements as represented in fig. 4c.

Alternatively, route implication may be implemented as a combination of areas around the robot and areas around sensed obstacles and/or mapped elements, wherein the area around the robot should preferably not intersect/cross the areas around sensed obstacles and/or mapped elements.

Note that the invention is not restricted to a particular type of route implications of sensed obstacles and mapped obstacles.

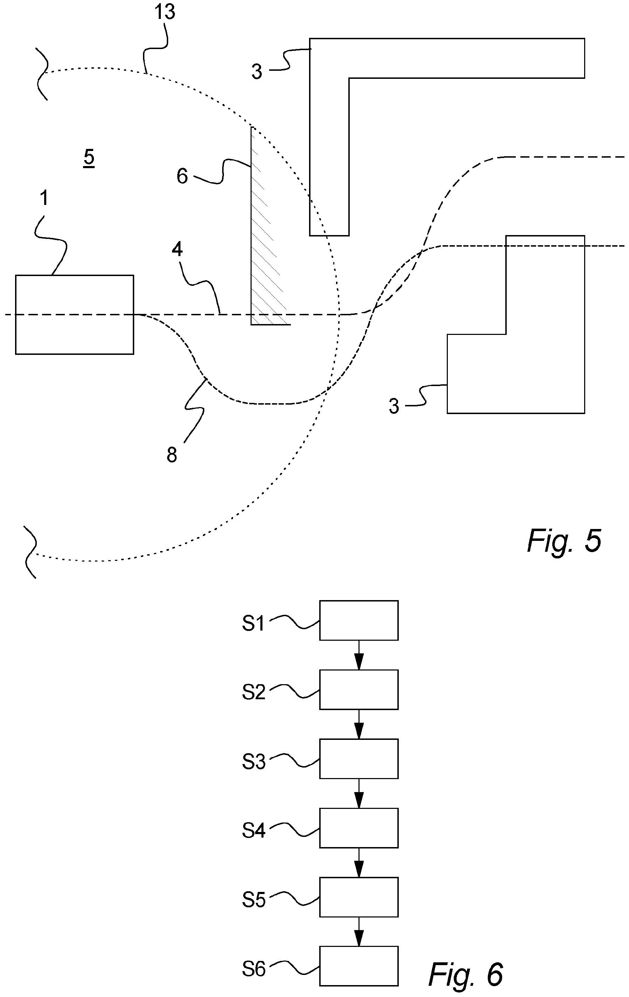

Fig. 5 illustrates a sensor-based sub route 8 according to an embodiment of the invention. In the figure, a top view of an autonomous mobile robot 1 travelling towards the right-hand-side according to a planned robot route 4 is shown. The planned robot route circumnavigates mapped elements 3. The robot and its sensory system (not shown) has a sensory system range 13 within which sensed obstacles 6 can be detected. This sensory system range 13 sets the outer limit of the robot surroundings 5.

In the particular scenario, which is illustrated in the figure, the robot senses a sensed obstacle 6 in its robot surroundings. The robot only senses the surfaces of the sensed obstacle 6 which are facing the robot, since only these surfaces are visible to the sensory system. The sensed obstacle 6 conflicts with the planned robot route 4, in the sense that the robot cannot travel along the planned robot route without violating route implications of sensed obstacles 6, which for this particular robot is a minimum distance. In fact, the planned robot route 4 passes right through the sensed obstacle 6. Thus, a sub route has to be established.

As proposed by aspects of the invention, a sensor-based sub route 8 is established, based on reduced route implications of mapped elements 3. Further, in this particular embodiment, the establishment of the sensor-based sub route 8 is based on replicating at least a part of the planned robot route 4.

The initial part of the sensor-based sub route 8 departs from the planned robot route 4 via an S-shaped curve ending a horizontal line just below the sensed obstacle (relative to the page of the figure). From this horizontal line and onward, the sensor-based sub route corresponds to a replication of a part of planned robot route 4, having the same turns and curvature. Later along the planned robot route 4 (outside the boundaries of the figure), the sensor-based sub route 8 may arrive at the planned robot route 4, for example in a manner similar to its departure from the planned robot route 4 via an S-shaped curve. Alternatively, the sensor-based sub route may continue until an end destination of the planned robot route.

Note that the sensed obstacle 6 potentially corresponds to one of the mapped elements 3 shifted downwards to the left (relatively to the page of the figure). This is an indication that the perceived robot location of the robot is incorrect. However, the robot has a limited vision of obstacles, and can only sense one sensed obstacle 6. By establishing a sub route based on replicating the planned robot route 4, the shape of the sub route indirectly takes into account future obstacles without having sensed these. If both mapped elements 3 are in reality shifted downwards to the left as the sensed obstacle 6 indicates, then the sensor-based sub route 8 advantageously circumnavigates these elements.

Note also that the sensor-based sub route, counterintuitively, passes right through one of the mapped elements 3. The initial route implications of this mapped element 3 are ignored to establish reduced route implications, upon which the sensor-based sub route is established.

The sensor-based sub route 8 may optionally arrive at another point of the planned robot route 4 at a later stage. For example, later along the planned robot route 4 (outside the boundaries of the figure), the sensor-based sub route 8 may arrive at the planned robot route 4, for example in a manner similar to its departure from the planned robot route 4 via an S-shaped curve. Alternatively, the sensor-based sub route 8may continue in parallel with the originally planned robot route 4 until an end destination of the planned robot route.

Fig. 6 illustrates a flow chart of method steps S1-S6 according to an embodiment of the invention. The method relates to dynamically navigating an autonomous mobile robot.

In a first step S1 of the method, an area map is provided. The area map relates to mapped elements having initial route implications. The area map may for example be provided to the robot from an external source, or it may be stored locally on the robot in a digital storage. The robot may take part in establishing the area map. It is typically not required to establish an area map each time the method is executed, but at least having an area map is typically necessary for having a planned robot route (through that map).

In a next step S2 of the method, a planned robot route through the area map is provided. It may for example be provided to the robot from an external source, or the robot may establish this planned robot route itself. The planned robot route is based on circumnavigating at least some of the mapped elements according to the initial route implications.

In a next step S3 of the method, the autonomous mobile robot is maneuvered through the planned robot route at least partly based on sensing robot surroundings of the autonomous mobile robot using a sensory system of the autonomous mobile robot. This step may for example be based on utilizing a simultaneous localization and mapping algorithm or a Monte Carlo localization algorithm.

In a next step S4 of the method, one or more sensed obstacles are sensed in the robot surroundings using the sensory system. The one or more sensed obstacles differentiate from the mapped elements.

In a next step S5 of the method, the initial route implications of at least some of the mapped elements are reduced to establish reduced route implications. Such a reduction may for example involve a reduction of minimum distances, a removal of minimum distances, or ignoring mapped elements altogether.

In a next step S6 of the method, a sensor-based sub route is established based on the reduced route implications.

Note that embodiments of the method are not restricted to a particular sequence of performing the steps, and that steps may be performed partially of fully in parallel. Note further that embodiments of the invention may have additional method steps, such as determining that at least one of the one or more sensed obstacles is conflicting with the planned robot route, and maneuvering the autonomous mobile robot through the sensor-based sub route.

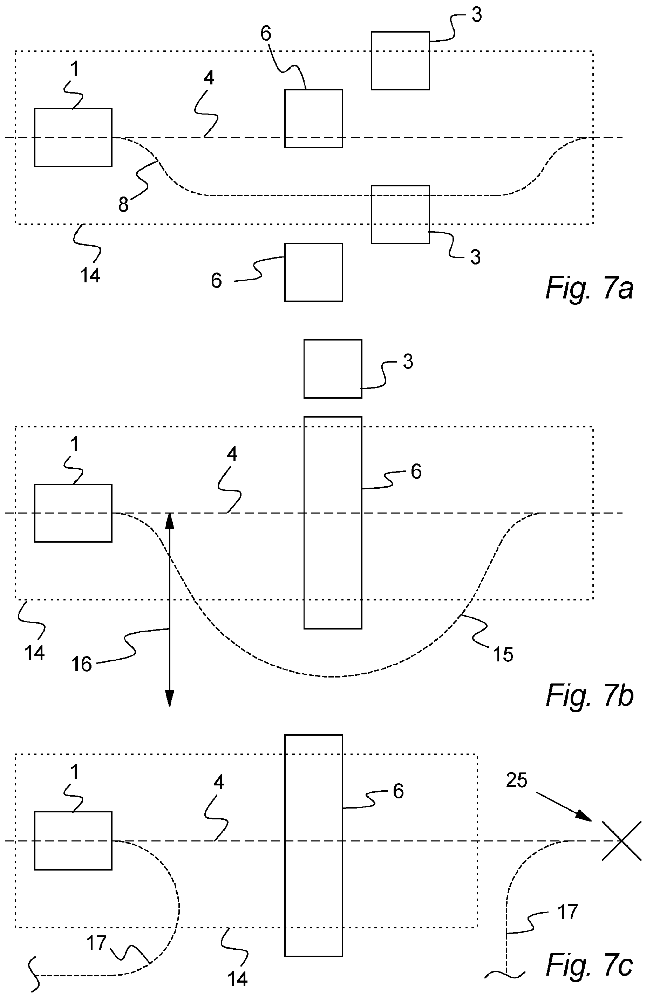

Fig. 7a-c illustrate various options sub route options according to embodiments of the invention.

Some embodiments have several sub routing options, e.g., besides the establishment of a sensor-based sub route based on the reduced route implications. The three subfigures each illustrate a particular sub routing option. An autonomous mobile robot according to the invention may for example be configured to establish each of these three sub routes, based on the circumstances.

Fig. 7a illustrates establishment of a sensor-based sub route 8 based on reduced route implications. An autonomous mobile robot 1 is located to the left-hand side of the illustration. A planned robot route 4 circumnavigates mapped elements 3, but the robot 1 senses sensed obstacles 6 in its surroundings which conflict with the planned robot route 4. The initial route implications of the mapped elements 3 are reduced to establish reduced route implications, upon which the sensor-based sub route 8 is established.

The illustration further shows a sub route envelope 14, which is an area defined relatively to the robot 1. The sensor-based sub route 8 will only be established when it can be established within this envelope 14 as in the illustrated example. Otherwise, another sub routing option will be used.

Fig. 7b illustrates establishment of an expanded sub route 15. An autonomous mobile robot 1 is located to the left-hand side of the illustration. The robot senses a sensed obstacle 6 which conflicts with the planned robot route 4. It is not possible to establish a sensor-based sub route within the sub route envelope 14, and hence an expanded sub route is established instead. In contrast to a sensor-based sub route in fig. 7a, the expanded sub route takes into account the initial route implications of mapped elements 3. In the illustrated scenario, the route implications of the mapped element 3 lead to the expanded sub route going below the sensed obstacle 6 (instead of above, relative to the page of the figure). The expanded sub route is established within a maximal expanded sub route deviation 16. By having such a maximal expanded sub route deviation 16 (relative to the planned robot route), the abstract solution space of possible sub routes is vastly reduced, leading to reduced processing for establishment of the expanded sub route 15.

Fig. 7c illustrates establishment of a global sub route 17. An autonomous mobile robot 1 is located to the left-hand side of the illustration. The robot senses a sensed obstacle 6 which conflicts with the planned robot route 4. It is not possible to establish a sensor-based sub route within the sub route envelope 14. Further, it is not possible to establish an expanded sub route within a maximum expanded sub route deviation. Instead, a global sub route 17 is established. The global sub route 17 takes into account the initial route implications of mapped elements 3, and route implications of sensed obstacles 6. Typically, it may thus be established under the same conditions as the initial route, the planned robot route 4, with the addition of sensed obstacles 6 and their implications. If the area map and/or the planned robot route 4 are subject to restrictions, the global sub route 17 may be subject to similar restrictions. The end destination of the global sub route 17 is typically the same as the end destination of the planned robot route 4.

From the above, it is now clear that the invention relates to the concept of reducing route implications of mapped elements when establishing a sub route of an autonomous mobile robot. This concept may potentially simplify and improve such sub routes. The invention also relates to the concept of use of replication of a part of a planned robot route when establishing a sub route.

The invention has been exemplified above with the purpose of illustration rather than limitation with reference to specific examples of methods and robots. Details such as a specific method and system structures have been provided in order to understand embodiments of the invention.

Note that detailed descriptions of well-known systems, devices, circuits, and methods have been omitted so as to not obscure the description of the invention with unnecessary details.

### List of reference signs:

- 1: Autonomous mobile robot
- 2: Area map
- 3: Mapped element
- 4: Planned robot route
- 5: Robot surroundings
- 6: Sensed obstacle
- 7: Sensory system
- 8: Sensor-based sub route
- 9: Initial route implications
- 10: Route implications of sensed obstacle
- 11: Reduced route implications
- 12: Route implications relatively to autonomous mobile robot
- 13: Sensory system range
- 14: Sub route envelope
- 15: Expanded sub route
- 16: Maximal expanded sub route deviation
- 17: Global sub route
- 18: Process controller
- 19: Digital storage access
- 20: Safety controller
- 21: Wheel
- 22: Support surface
- 23: Flat-floored environment
- 24: Longitudinal gap
- 25: End destination

### List of reference signs:

- 1: Autonomous mobile robot
- 2: Area map
- 3: Mapped element
- 4: Planned robot route
- 5: Robot surroundings
- 6: Sensed obstacle
- 7: Sensory system
- 8: Sensor-based sub route
- 9: Initial route implications
- 10: Route implications of sensed obstacle
- 11: Reduced route implications
- 12: Route implications relatively to autonomous mobile robot
- 13: Sensory system range
- 14: Sub route envelope
- 15: Expanded sub route
- 16: Maximal expanded sub route deviation
- 17: Global sub route
- 18: Process controller
- 19: Digital storage access
- 20: Safety controller
- 21: Wheel
- 22: Support surface
- 23: Flat-floored environment
- 24: Longitudinal gap
- 25: End destination

## Claims

1. A method for dynamically navigating an autonomous mobile robot (1), wherein said method comprises the steps of:
providing an area map (2) relating to mapped elements (3), said mapped elements having initial route implications, said initial route implications being route restrictions that a planned robot route cannot pass through;
providing a planned robot route (4) through said area map (2), wherein said planned robot route is based on circumnavigating at least some of said mapped elements (3) according to said initial route implications;
maneuvering said autonomous mobile robot (1) through said planned robot route at least partly based on sensing robot surroundings (5) of said autonomous mobile robot (1) using a sensory system (7) of said autonomous mobile robot (1);
the method is **characterized in** the steps of:
sensing one or more sensed obstacles (6) in said robot surroundings using said sensory system (7), wherein said one or more sensed obstacles (6) differentiate from said mapped elements (3) wherein said one or more sensed obstacles (6) correspond to the physical obstacle that said mapped elements (3) represent; reducing said initial route implications by ignoring at least some of said mapped elements (3) to establish reduced route implications; and
establishing a sensor-based sub route (8) based on said reduced route implications.

2. A method according to claim 1, wherein said step of reducing said initial route implications is performed for mapped elements (3) within a sub route envelope relative to said autonomous mobile robot (1).

3. A method according to claim 2, wherein mapped elements (3) outside said sub route envelope maintain said initial route implications during said step of establishing said sensor-based sub route.

4. A method according to any of the preceding claims, wherein said method comprises a step of determining that at least one of said one or more sensed obstacles (6) is conflicting with said planned robot route, wherein said step of establishing a sensor-based sub route is initiated automatically when at least one of said one or more sensed obstacles (6) is conflicting with said planned robot route.

5. A method according to claim 4, wherein said step of determining that at least one of said one or more sensed obstacles (6) is conflicting is based on automatically determining whether said autonomous mobile robot (1) can be maneuvered along said planned robot route without violating said initial route implications with respect to said one or more sensed obstacles (6).

6. A method according to any of the preceding claims, wherein said sensor-based sub route is conflicting with said initial route implications of at least some of said mapped elements (3).

7. A method according to any of claims 2-6, wherein said sensor-based sub route lies within said sub route envelope.

8. An autonomous mobile robot (1) for dynamical navigation, wherein said autonomous mobile robot (1) comprises:
a sensory system (7) arranged to sense robot surroundings of said autonomous mobile robot (1) to sense one or more sensed obstacles (6);
a digital storage access (19) providing access to an area map (2) relating to mapped elements (3), said mapped elements having initial route implications, said initial route implications being route restrictions that a planned robot route cannot pass through, and said digital storage access (19) providing access to a planned robot route through said area map (2), wherein said planned robot route is based on circumnavigating at least some of said mapped elements (3) according to said initial route implications; and
a process controller (18) communicatively connected to said sensory system (7) and said digital storage access (19),
wherein said process controller (18) is configured to maneuver said autonomous mobile robot (1) through said planned robot route at least partly based on sensing said robot surroundings using said sensory system (7),
said autonomous mobile robot (1) is **characterized in that**
said process controller (18) is configured to ignore at least some of said mapped elements (3) to establish reduced route implications when said one or more sensed obstacles (6) differentiate from said mapped elements (3) wherein said one or more sensed obstacles (6) correspond to the physical obstacle that said mapped elements (3) represent,
wherein said process controller (18) is configured to establish a sensor-based sub route based on said reduced route implications.

9. An autonomous mobile robot (1) according to claim 8, wherein said process controller (18) is configured to reduce said initial route implications of at least some of said mapped elements (3) to establish said reduced route implications when said one or more sensed obstacles (6) differentiate from said mapped elements (3) while said sensor-based sub route is possible to establish within a maximal sensor-based sub route deviation relatively to said planned robot route.

10. An autonomous mobile robot (1) according claim 9, wherein said process controller (18) is configured to establish an expanded sub route when said one or more sensed obstacles (6) differentiate from said mapped elements while said sensor-based sub route is impossible to establish within said maximal sensor-based sub route deviation relatively to said planned robot route.

11. An autonomous mobile robot (1) according to claim 10, wherein said expanded sub route is established within a maximal expanded sub route deviation relatively to said planned robot route.

12. An autonomous mobile robot (1) according to claim 11, wherein said process controller (18) is configured to establish said global sub route when said one or more sensed obstacles differentiate from said mapped elements (3) while said expanded sub route is impossible to establish within said maximal expanded sub route deviation.

13. Use of a replication of a planned robot route when establishing a sub route of an autonomous mobile robot (1), wherein said planned robot route goes through an area map (2) relating to mapped elements (3), wherein said planned robot route is based on circumnavigating at least some of said mapped elements (3) according to initial route implications, said initial route implications being route restrictions that a planned route cannot pass through mapped elements, wherein establishment of said sub route is initiated when a sensed obstacle (6) differentiate from said mapped elements (3) when said one or more sensed objects (6) correspond to the physical obstacle that said mapped element represent.

14. Use according to any of claims 13, wherein a substantial part of said sub route is based on a displacement of said planned robot route, such that adjacent local segments of said sub route are respectively parallel with adjacent local segments of said planned robot route.

## Patentansprüche

1. Verfahren zum dynamischen Navigieren eines autonomen mobilen Roboters (1), wobei das Verfahren die Schritte umfasst:
Bereitstellen einer Gebietskarte (2) bezüglich kartierter Elemente (3), wobei die kartierten Elemente anfängliche Routenimplikationen aufweisen, die anfänglichen Routenimplikationen Routenbeschränkungen sind, die eine geplante Roboterroute nicht passieren kann;
Bereitstellen einer geplanten Roboterroute (4) durch die Gebietskarte (2), wobei die geplante Roboterroute auf einem Umfahren von mindestens einigen der kartierten Elemente (3) entsprechend den anfänglichen Routenimplikationen basiert;
Manövrieren des autonomen mobilen Roboters (1) durch die geplante Roboterroute, mindestens teilweise basierend auf einem Erfassen einer Roboterumgebung (5) des autonomen mobilen Roboters (1) unter Verwendung eines Sensorsystems (7) des autonomen mobilen Roboters (1);
wobei das Verfahren durch die Schritte **gekennzeichnet ist:**
Erfassen eines oder mehrerer erfasster Hindernisse (6) in der Roboterumgebung unter Verwendung des Sensorsystems (7), wobei sich das eine oder die mehreren erfassten Hindernisse (6) von den kartierten Elementen (3) unterscheiden, wobei das eine oder die mehreren erfassten Hindernisse (6) dem physischen Hindernis entsprechen, das die kartierten Elemente (3) darstellt; Reduzieren der anfänglichen Routenimplikationen durch Ignorieren von mindestens einigen der kartierten Elemente (3), um reduzierte Routenimplikationen zu ermitteln; und
Ermitteln einer sensorbasierten Teilroute (8) basierend auf den reduzierten Routenimplikationen.

2. Verfahren nach Anspruch 1, wobei der Schritt des Reduzierens der anfänglichen Routenimplikationen für kartierte Elemente (3) innerhalb einer Teilroutenhülle relativ zu dem autonomen mobilen Roboter (1) durchgeführt wird.

3. Verfahren nach Anspruch 2, wobei kartierte Elemente (3) außerhalb der Teilroutenhülle die anfänglichen Routenimplikationen während des Schritts des Ermittelns der sensorbasierten Teilroute beibehalten.

4. Verfahren nach einem der vorstehenden Ansprüche, wobei das Verfahren einen Schritt zum Bestimmen umfasst, dass mindestens eines des einen oder der mehreren erfassten Hindernisse (6) mit der geplanten Roboterroute in Konflikt steht, wobei der Schritt zum Ermitteln einer sensorbasierten Teilroute automatisch eingeleitet wird, wenn mindestens eines des einen oder der mehreren erfassten Hindernisse (6) mit der geplanten Roboterroute in Konflikt steht.

5. Verfahren nach Anspruch 4, wobei der Schritt des Bestimmens, dass mindestens eines des einen oder der mehreren erfassten Hindernisse (6) in Konflikt steht, auf dem automatischen Bestimmen basiert, ob der autonome mobile Roboter (1) entlang der geplanten Roboterroute manövriert werden kann, ohne die anfänglichen Routenimplikationen in Bezug auf das eine oder die mehreren erfassten Hindernisse (6) zu verletzen.

6. Verfahren nach einem der vorstehenden Ansprüche, wobei die sensorbasierte Teilroute mit den anfänglichen Routenimplikationen von mindestens einigen der kartierten Elemente (3) in Konflikt steht.

7. Verfahren nach einem der Ansprüche 2 bis 6, wobei die sensorbasierte Teilroute innerhalb der Teilroutenhülle liegt.

8. Autonomer mobiler Roboter (1) für eine dynamische Navigation, wobei der autonome mobile Roboter (1) umfasst:
ein Sensorsystem (7), das eingerichtet ist, um die Roboterumgebung des autonomen mobilen Roboters (1) zu erfassen, um ein oder mehrere erfasste Hindernisse (6) zu erfassen;
einen digitalen Speicherzugriff (19), der Zugriff auf eine Gebietskarte (2) bezüglich kartierter Elemente (3) bereitstellt, wobei die kartierten Elemente anfängliche Routenimplikationen aufweisen, die anfänglichen Routenimplikationen Routenbeschränkungen sind, die eine geplante Roboterroute nicht passieren kann, und der digitale Speicherzugriff (19) Zugriff auf eine geplante Roboterroute durch die Gebietskarte (2) bereitstellt, wobei die geplante Roboterroute auf dem Umfahren von mindestens einigen der kartierten Elemente (3) gemäß den anfänglichen Routenimplikationen basiert; und
eine Prozesssteuerung (18), die mit dem Sensorsystem (7) und dem digitalen Speicherzugriff (19) kommunikativ verbunden ist,
wobei die Prozesssteuerung (18) konfiguriert ist, um den autonomen mobilen Roboter (1) mindestens teilweise basierend auf dem Erfassen der Roboterumgebung unter Verwendung des Sensorsystems (7) durch die geplante Roboterroute zu manövrieren,
wobei der autonome mobile Roboter (1) **dadurch gekennzeichnet ist, dass**
wobei die Prozesssteuerung (18) konfiguriert ist, um mindestens einige der kartierten Elemente (3) zu ignorieren, um reduzierte Routenimplikationen zu ermitteln, wenn sich das eine oder die mehreren erfassten Hindernisse (6) von den kartierten Elementen (3) unterscheiden, wobei das eine oder die mehreren erfassten Hindernisse (6) dem physischen Hindernis entsprechen, das die kartierten Elemente (3) darstellt,
wobei die Prozesssteuerung (18) konfiguriert ist, um eine sensorbasierte Teilroute basierend auf den reduzierten Routenimplikationen zu ermitteln.

9. Autonomer mobiler Roboter (1) nach Anspruch 8, wobei die Prozesssteuerung (18) konfiguriert ist, um die anfänglichen Routenimplikationen von mindestens einigen der kartierten Elemente (3) zu reduzieren, um die reduzierten Routenimplikationen zu ermitteln, wenn sich das eine oder die mehreren erfassten Hindernisse (6) von den kartierten Elementen (3) unterscheiden, während das Ermitteln der sensorbasierten Teilroute innerhalb einer maximalen sensorbasierten Teilroutenabweichung relativ zu der geplanten Roboterroute möglich ist.

10. Autonomer mobiler Roboter (1) nach Anspruch 9, wobei die Prozesssteuerung (18) konfiguriert ist, um eine erweiterte Teilroute zu ermitteln, wenn sich das eine oder die mehreren erfassten Hindernisse (6) von den kartierten Elementen unterscheiden, während das Ermitteln der sensorbasierten Teilroute innerhalb der maximalen sensorbasierten Teilroute relativ zu der geplanten Roboterroute unmöglich ist.

11. Autonomer mobiler Roboter (1) nach Anspruch 10, wobei die erweiterte Teilroute innerhalb einer maximalen Abweichung der erweiterten Teilroute relativ zu der geplanten Roboterroute ermittelt wird.

12. Autonomer mobiler Roboter (1) nach Anspruch 11, wobei die Prozessteuerung (18) konfiguriert ist, um die globale Teilroute zu ermitteln, wenn sich das eine oder die mehreren erfassten Hindernisse von den kartierten Elementen (3) unterscheiden, während das Ermitteln der erweiterten Teilroute innerhalb der maximalen Abweichung von der erweiterten Teilroute unmöglich ist.

13. Verwendung einer Replikation einer geplanten Roboterroute beim Ermitteln einer Teilroute eines autonomen mobilen Roboters (1), wobei die geplante Roboterroute durch eine Gebietskarte (2) bezüglich kartierter Elemente (3) verläuft, wobei die geplante Roboterroute auf dem Umfahren von mindestens einigen der kartierten Elemente (3) gemäß anfänglichen Routenimplikationen basiert, die anfänglichen Routenimplikationen Routenbeschränkungen sind, die eine geplante Route nicht durch kartierte Elemente passieren kann, wobei das Ermitteln der Teilroute eingeleitet wird, wenn sich ein erfasstes Hindernis (6) von den kartierten Elementen (3) unterscheidet, wenn das eine oder die mehreren erfassten Objekte (6) dem physischen Hindernis entsprechen, das das kartierte Element darstellt.

14. Verwendung nach einem der Ansprüche 13, wobei ein wesentlicher Teil der Teilroute auf einer Verschiebung der geplanten Roboterroute basiert, derart, dass angrenzende lokale Segmente der Teilroute jeweils parallel zu angrenzenden lokalen Segmenten der geplanten Roboterroute sind.

## Revendications

1. Procédé permettant de naviguer dynamiquement un robot mobile autonome (1), dans lequel ledit procédé comprend les étapes consistant à :
fournir une carte de zone (2) relative à des éléments cartographiés (3), lesdits éléments cartographiés présentant des implications d'itinéraire initial, lesdites implications d'itinéraire initial étant des restrictions d'itinéraire qu'un itinéraire de robot planifié ne peut pas franchir ;
fournir un itinéraire de robot planifié (4) à travers ladite carte de zone (2), dans lequel ledit itinéraire de robot planifié est basé sur la navigation autour d'au moins certains desdits éléments cartographiés (3) selon lesdites implications d'itinéraire initial ;
manoeuvrer ledit robot mobile autonome (1) à travers ledit itinéraire de robot planifié, au moins en partie sur la base de la détection des environs du robot (5) dudit robot mobile autonome (1) à l'aide d'un système sensoriel (7) dudit robot mobile autonome (1) ;
le procédé est **caractérisé par** les étapes consistant à :
détecter un ou plusieurs obstacles détectés (6) dans lesdits environs du robot à l'aide dudit système sensoriel (7), dans lequel ledit ou lesdits obstacles détectés (6) diffèrent desdits éléments cartographiés (3), dans lequel ledit ou lesdits obstacles détectés (6) correspondent à l'obstacle physique que lesdits éléments cartographiés (3) représentent ; réduire lesdites implications d'itinéraire initial en ignorant au moins certains desdits éléments cartographiés (3) pour établir des implications d'itinéraire réduit ; et
établir un sous-itinéraire basé sur un capteur (8) sur la base desdites implications d'itinéraire réduit.

2. Procédé selon la revendication 1, dans lequel l'étape consistant à réduire lesdites implications d'itinéraire initial est réalisée pour des éléments cartographiés (3) dans une enveloppe de sous-itinéraire par rapport audit robot mobile autonome (1).

3. Procédé selon la revendication 2, dans lequel des éléments cartographiés (3) à l'extérieur de ladite enveloppe de sous-itinéraire maintiennent lesdites implications d'itinéraire initial pendant ladite étape consistant à établir ledit sous-itinéraire basé sur un capteur.

4. Procédé selon l'une quelconque des revendications précédentes, dans lequel ledit procédé comprend une étape consistant à déterminer qu'au moins l'un parmi ledit ou lesdits obstacles détectés (6) est en conflit avec ledit itinéraire de robot planifié, dans lequel l'étape consistant à établir un sous-itinéraire basé sur un capteur est initiée automatiquement lorsqu'au moins l'un parmi ledit ou lesdits obstacles détectés (6) est en conflit avec ledit itinéraire de robot planifié.

5. Procédé selon la revendication 4, dans lequel l'étape consistant à déterminer qu'au moins l'un parmi ledit ou lesdits obstacles détectés (6) est en conflit, est basée sur le fait de déterminer automatiquement si ledit robot mobile autonome (1) peut être manoeuvré le long dudit itinéraire de robot planifié sans enfreindre lesdites implications d'itinéraire initial en ce qui concerne ledit ou lesdits obstacles détectés (6).

6. Procédé selon l'une quelconque des revendications précédentes, dans lequel ledit sous-itinéraire basé sur un capteur est en conflit avec lesdites implications d'itinéraire initial d'au moins certains desdits éléments cartographiés (3).

7. Procédé selon l'une quelconque des revendications 2 à 6, dans lequel ledit sous-itinéraire basé sur un capteur se trouve dans ladite enveloppe de sous-itinéraire.

8. Robot mobile autonome (1) pour une navigation dynamique, dans lequel ledit robot mobile autonome (1) comprend :
un système sensoriel (7) conçu pour détecter des environs du robot dudit robot mobile autonome (1) afin de détecter un ou plusieurs obstacles détectés (6) ;
un accès au stockage numérique (19) donnant accès à une carte de zone (2) relative à des éléments cartographiés (3), lesdits éléments cartographiés présentant des implications d'itinéraire initial, lesdites implications d'itinéraire initial étant des restrictions d'itinéraire qu'un itinéraire de robot planifié ne peut pas franchir, et ledit accès au stockage numérique (19) donnant accès à un itinéraire de robot planifié à travers ladite carte de zone (2), dans lequel ledit itinéraire de robot planifié est basé sur la navigation autour d'au moins certains desdits éléments cartographiés (3) selon lesdites implications d'itinéraire initial ; et
un dispositif de commande de processus (18) connecté de manière communicative audit système sensoriel (7) et audit accès au stockage numérique (19),
dans lequel ledit dispositif de commande de processus (18) est configuré pour manoeuvrer ledit robot mobile autonome (1) à travers ledit itinéraire de robot planifié, au moins en partie sur la base de la détection desdits environs du robot à l'aide dudit système sensoriel (7),
ledit robot mobile autonome (1) est **caractérisé en ce que**
ledit dispositif de commande de processus (18) est configuré pour ignorer au moins certains desdits éléments cartographiés (3) afin d'établir des implications d'itinéraire réduit lorsque ledit ou lesdits obstacles détectés (6) diffèrent desdits éléments cartographiés (3) dans lequel ledit ou lesdits obstacles détectés (6) correspondent à l'obstacle physique que lesdits éléments cartographiés (3) représentent,
le dispositif de commande de processus (18) est configuré pour établir un sous-itinéraire basé sur un capteur sur la base desdites implications d'itinéraire réduit.

9. Robot mobile autonome (1) selon la revendication 8, dans lequel ledit dispositif de commande de processus (18) est configuré pour réduire lesdites implications d'itinéraire initial d'au moins certains desdits éléments cartographiés (3) afin d'établir lesdites implications d'itinéraire réduit lorsque ledit ou lesdits obstacles détectés (6) diffèrent desdits éléments cartographiés (3) alors que ledit sous-itinéraire basé sur un capteur peut être établi dans une déviation maximale de sous-itinéraire basé sur un capteur par rapport audit itinéraire de robot planifié.

10. Robot mobile autonome (1) selon la revendication 9, dans lequel ledit dispositif de commande de processus (18) est configuré pour établir un sous-itinéraire élargi lorsque ledit ou lesdits obstacles détectés (6) diffèrent desdits éléments cartographiés alors que ledit sous-itinéraire basé sur un capteur ne peut être établi dans ladite déviation maximale de sous-itinéraire basé sur un capteur par rapport audit itinéraire de robot planifié.

11. Robot mobile autonome (1) selon la revendication 10, dans lequel ledit sous-itinéraire élargi est établi dans une déviation maximale de sous-itinéraire élargi par rapport audit itinéraire de robot planifié.

12. Robot mobile autonome (1) selon la revendication 11, dans lequel ledit dispositif de commande de processus (18) est configuré pour établir ledit sous-itinéraire global lorsque ledit ou lesdits obstacles détectés diffèrent desdits éléments cartographiés (3) alors que ledit sous-itinéraire élargi ne peut être établi dans ladite déviation maximale de sous-itinéraire élargi.

13. Utilisation d'une réplication d'un itinéraire de robot planifié lors de l'établissement d'un sous-itinéraire d'un robot mobile autonome (1), dans laquelle ledit itinéraire de robot planifié traverse une carte de zone (2) relative à des éléments cartographiés (3), dans laquelle ledit itinéraire de robot planifié est basé sur la navigation autour d'au moins certains desdits éléments cartographiés (3) selon des implications d'itinéraire initial, lesdites implications d'itinéraire initial étant des restrictions d'itinéraire selon lesquelles un itinéraire planifié ne peut pas franchir des éléments cartographiés, dans laquelle l'établissement dudit sous-itinéraire est initié lorsqu'un obstacle détecté (6) diffère desdits éléments cartographiés (3) lorsque ledit ou lesdits objets détecté (6) correspondent à l'obstacle physique que lesdits éléments cartographiés représentent.

14. Utilisation selon l'une quelconque des revendications 13, dans laquelle une partie substantielle dudit sous-itinéraire est basée sur un déplacement dudit itinéraire de robot planifié, de telle sorte que des segments locaux adjacents dudit sous-itinéraire sont respectivement parallèles à des segments locaux adjacents dudit itinéraire de robot planifié.
